# EUROPEAN PATENT APPLICATION

(11) **EP 1 091 278 A2**
(43) Date of publication of application: **11.04.2001**
(21) Application number: 00660162.9
(22) Date of filing: 22.09.2000
(51) Int. Cl.: G06F 1/16, G06F 15/02

(54) **Electronic device**

(30) Priority: 28.09.1999 FI 992074
(71) Applicant: NOKIA MOBILE PHONES LTD., 02150 Espoo (FI)
(72) Inventor: Keijo, Virtanen, 33610 Tampere (FI)
(74) Representative: Pursiainen, Timo Pekka

(57) **Abstract**

The invention relates to an electronic device (1, 9) comprising means (2, 3) for performing memo functions, means (2, 3) for defining data in said memo functions, and at least one display means (4) for displaying data defined in the memo functions. The electronic device (1, 9) also comprises means (5) for generating free-form markings (204-208) and means (2, 3) for adding said free-form markings to data defined in said memo functions. The invention also relates to a method in an electronic device (1, 9) for performing memo functions, defining data in said memo functions and displaying data defined in the memo functions. In the method, free-form markings (204-208) are generated, which are added to data defined in said memo functions.

## Description

The present invention relates to an electronic device comprising means for performing memo functions, means for defining data in said memo functions, and at least one display means for displaying the data defined in the memo functions. The invention also relates to a method in an electronic device for performing memo functions, for defining data in said memo functions, and for displaying the data defined in the memo functions.

There are known several electronic devices which are also called personal digital assistants (PDA) and which comprise memo functions, such as time-specific memo functions, *i.e.* calendar functions, telephone directory functions, address book functions, and/or notepad functions. Such an electronic device typically comprises means for entering information, means for storing information, as well as means for displaying information to the user. The means for entering information comprise either a keypad or a so-called touch-sensitive means. With such a touch-sensitive means, the user can select functions by pressing *e.g.* with a pen or a finger. Furthermore, in some applications, the user can use the touch-sensitive means to write text and to draw images in the electronic device. This touch-sensitive means is normally at least partly placed on top of a display means, wherein it is at least partly transparent. This arrangement makes it possible to display information on the display means and simultaneously to use the touch-sensitive screen to examine selections and other functions possibly performed by the user. Such a unit consisting of a touch-sensitive means and a display means is generally also called a touch screen.

In the implementation of the touch-sensitive means, several different principles are known, such as the resistive principle, the capacitive principle, the surface-acoustic principle, and the optical principle. Irrespective of the principle of implementation of the touch-sensitive means, preferably the X and Y coordinates of the contact point are examined to determined the operations caused by the pressing.

By means of a touch screen, the electronic device can be equipped with *e.g.* menu functions, wherein the display means is used to display different selection options, whose selection is made with the touch-sensitive means. Thus, the contact point is identified with the touch-sensitive means and it is determined, whether the touching occurred within the range of such a menu function. Writing a text and drawing images can be preferably implemented in such a way that the movement of a pen is examined by means of the touch-sensitive means, and the X and Y coordinates describing the movement of the pen are stored in the memory means of the electronic device. On the basis of these coordinates, the corresponding image information is formed on the display means, wherein the user can make sure that the electronic device has interpreted the pressings of a pen or another marking device correctly.

In electronic devices in which a touch-sensitive means is used for entering information and writing text, the aim is to recognize handwritten text and to convert it to an ASCII character string or the like. However, in electronic devices with a keypad, such a conversion is not necessary but the entered text is directly stored, preferably as an ASCII character string.

Using the calendar function of the electronic device, the user can, in a way known as such, browse the events of different dates, store information on *e.g.* appointments, negotiations and other important events, set an alarm or the like for a desired event, *etc.* Using the telephone directory function, the user can, in a way known as such, store and browse telephone directory data and address data. By using the notepad functions, the user can take notes, search for previously taken and stored notes *e.g.* with headwords, *etc.* In such memo functions, data are stored in a very organized manner. For example in the calendar function, the user selects a desired moment of time and then writes information on the event related to this moment of time. In some electronic devices, it is also possible to enter different ways of pointing out, such as underlining, selecting a colour for the text, or the like. Entering and changing event data in such an electronic device is not very user-friendly. This is one reason why a conventional paper calendar or paper notebook is still used as a memo means besides an electronic device.

The user of a paper calendar can writes notes very freely, point things out in various ways, add comments, strike out or erase changed information, *etc.*

It is an aim of the present invention to combine advantageous features of a paper calendar and corresponding non-electric memo means with those of the memo functions of an electronic device. The invention is based on the idea that the memo functions of the electronic device can be used to add free-form information to the memo data by means of a touch-sensitive means. The electronic device according to the present invention is characterized in that the electronic device also comprises means for forming free-form notes and means for adding said free-form notes to data defined in said memo functions. The method according to the present invention is characterized in that in the method, also free-form notes are formed and said free-form notes are added to data defined in said memo functions.

The present invention gives considerable advantages. With an electronic device according to the invention, the user can easily add free-form notes to memo data. This makes the memo data more informative to the user. Moreover, the user can utilize the features of the memo functions which are known *per se,* such as to set alarms, to time e-mail transmissions, facsimile transmissions, *etc.* according to calendar events, to find notes on the basis of headwords, *etc.* At a desired point, *e.g.* for a certain date, the user can easily add an assignment list by manual writing, which list is displayed when the user browses the calendar for the date in question. By the method of the invention, the assignment list can be easily stored also *e.g.* in connection with the address/telephone directory data of a certain person. Thus, for example when looking for a telephone number when going to call the person in question, the user sees this list in which the user has stored in advance *e.g.* questions or items which the user wants to remind this person of. According to the invention, the free-form additional notes can also be easily deleted, wherein memory space is cleared for other use.

In the following, the invention will be described in more detail with reference to the appended drawings, in which
- Fig. 1: shows an electronic device according to an advantageous embodiment of the invention in a reduced block chart,
- Fig. 2: shows an example of information to be displayed on the display means of an electronic device according to an advantageous embodiment of the invention, and
- Fig. 3: shows a wireless communication device according to an advantageous embodiment of the invention.

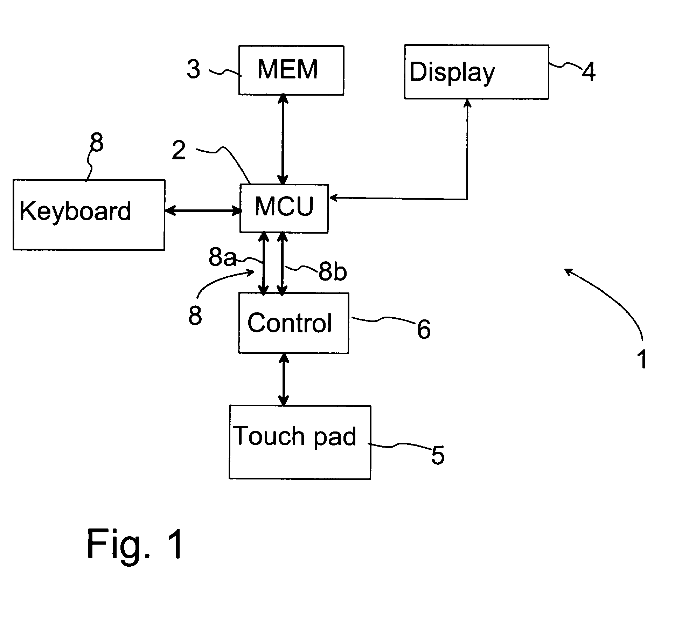

Figure 1 is a reduced block chart illustrating an electronic device 1 according to an advantageous embodiment of the invention. The electronic device comprises *e.g.* a processor 2, such as a microprocessor, memory means 3, a display means 4, as well as a touch-sensitive means 5. Furthermore, the electronic device 1 has means 6 for controlling the touch-sensitive means. The electronic device 1 of Fig. 1 also comprises a keypad 7, but it is obvious that the key functions can also be performed solely by means of the touch-sensitive means 5, wherein the keypad 7 is not necessarily required.

In practical applications, the operating principle of the touch-sensitive means 5 can vary, and it is known as such for anyone skilled in the art. The precision of the touch-sensitive means 5 is for example 512 × 256, *i.e*. 512 in the direction of the X axis and 256 in the direction of the Y axis. The touch-sensitive means 5 is preferably provided with a control means 6 for the touch-sensitive means, whereby it is possible to find out the coordinates of the contact point. It is obvious that the functions of this control means 6 can also be implemented as control commands of the processor 2.

The interface between the processor 2 and the control means 6 can be implemented *e.g.* on the basis of messages by means of a connection bus, wherein the processor 2 and the control means 6 transmit information by means of messages. Another alternative is to couple the control means 6 directly to the I/O space of the processor 2 or to a memory space in a way known as such, wherein the processor 2 performs the transmission of information by means of control signals. The connection bus between the processor 2 and the control means 6 is indicated with reference 8 in Fig. 1. The number of lines in the connection bus 8 is dependent on, for example, the respective way of connection used. Preferably, the connection bus comprises a data bus 8a for the transmission of coordinate data and a control bus 8b for the transmission of control data. The data bus 8a can be either in parallel form or serial form, as is known *per se.*

In the embodiment of Fig. 1, the contact point is determined preferably in the following way. The processor 2 sets in the control bus 8b of the touch-sensitive means a signal with which the control means 6 of the touch-sensitive means starts to determine the coordinates of the contact point. After determining the contact point, the control means 6 of the touch-sensitive means reports this to the processor 2. If message-based data transmission is used, the control means 6 generates a message containing the coordinate data to be transmitted via the data bus 8a to the processor 2. The processor 2 detects the received message and examines its content. In a situation in which no contact has been detected, the control means 6 generates *e.g*. coordinate data - 1, -1 or a corresponding coordinate combination outside of the touch area, on the basis of which the processor 2 can detect that no contact has been detected.

In the transmission of the contact data, it is also possible to use the so-called interrupt principle, wherein the control means 6 of the touch-sensitive means generates an interrupt request to the processor 2 as a sign that new coordinate data can be read. This makes it possible that the processor 2 can perform other measures while the control means 6 is determining the coordinates of the contact point. In some applications, this time can be even in the order of several milliseconds. This interrupt request is preferably transmitted by means of the control line 8b.

The determination of the contact point can also be performed without control by the processor 2, wherein the control means 6 of the touch-sensitive means preferably performs determination of the coordinates at intervals. If the contact means 6 detects that the touch-sensitive means 5 is being pressed, the control means 6 generates an interruption to the processor 2, wherein a corresponding interrupt service program in the processor 2 is used to take the necessary steps to read the coordinate data of the press point preferably from the control means 6.

Yet another alternative is that the processor 2 scans the registers (not shown) of the control means 6 at intervals to find out whether a new touch has been detected. In this specification, a new touch refers to a touch in which the user has, between touches, lifted up a marking means 11 from the surface of the touch-sensitive means 5, as well as a touch in which the user has, without lifting the marking means 11, moved it on the surface of the touch-sensitive means 5. In the first alternative, the coordinates of the new contact point can be the same as the coordinates of the previous contact point. However, it is a new touch; for example, the user has made the same selection twice consecutively. In the latter alternative, the new touch is interpreted to have been made first after at least one item of the coordinate data has been changed. For example in the drawing of a line, the movement of the marking means 11 can be detected by examining changes in the coordinate data. In the drawing of a line, it is important to detect also the lifting up of the marking means 11 from the surface of the touch-sensitive means 5, because then the drawing of the previous line is finished and the line should not be continued to the next contact point.

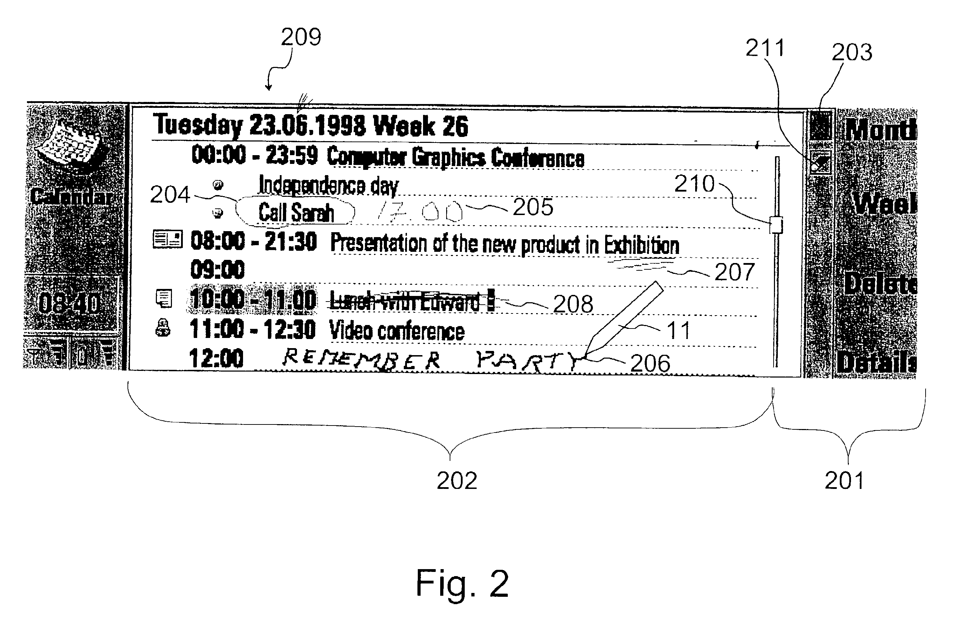

In the following, the operation of the method according to a preferred embodiment of the invention will be described in connection with the electronic device 1 of Fig. 1. The display means 4 is used preferably to display at least part of the calendar of the present day, one example being shown in the appended Figure 2. Let us assume that at least part of the display area of the calendar is reserved for various menu and/or activation functions and part is allocated for displaying and supplementing data. In the example of Fig. 2, reference number 201 indicates such a menu area and reference number 202 indicates an area allocated for displaying and editing calendar data. Using the menu function 201, the user can select a month, week, or day which he/she uses to look at in more detail. Further, using the selection box 203, the user can activate or deactivate the marking function according to the invention. The activation can also be preferably implemented in such a way that the user makes a stroke with the marking means 11, *e.g.* draws a line on the surface of the touch-sensitive means 5, which is detected by the electronic device and interpreted as activation of the marking function.

Let us assume that the user has activated the marking function, after which the user can make free-form markings in the calendar with a pen or another marking means 11. The user can *e.g.* draw a circle 204 around a desired point, add text 205,206 manually, underline 207 and strike out 208 text. In addition, the user can *e.g.* draw pictures.

At the stage when the user makes these markings, the control means 6 transmits information on the movements of the marking means 11 as a set of coordinate data which are stored by the processor 2. Furthermore, the processor 2 converts these coordinate data into information to be displayed on the display means 4. Thus the user immediately finds that the added comments are stored correctly.

Because the markings added by the user are related to certain moments of time, when storing these data one must also store information on the moment of time they are related to. Some advantageous alternatives in connection with the calendar functions are day-specific, week-specific, month-specific, or even year-specific storage. Thus, when the user moves on to examine such a period in which the user has previously defined his/her own free-form markings, the electronic device 1 displays also these markings together with the data of the period in question. For example in the situation of Fig. 2, the markings are related to the events of a specific date 209. If the user moves on, for example with a scroll bar 210, to study the events of another date, these free-form markings must be stored by the user, if necessary, and deleted from the display means 4. After this, the electronic device 1 displays possible markings related to the new date.

The invention can also be applied in such a way that preferably by programming, the contact area of the touch-sensitive screen is divided into partial areas, wherein these partial areas can be used for registering the free-form markings *e.g.* according to hours in a calendar. For example when applying such an embodiment in the situation of Fig. 2, the markings are related to the morning of a specific date 209. If the user moves on, *e.g.* with the scroll bar 210 to study the other events of the day, these markings added by the user can be transferred or removed from the display means 4 respectively. Also, in a situation in which the user moves on to data of another date, the markings entered above must be removed from the display means 4 to display the data of the date which the user moves on to study, if any data are stored for that date. In a corresponding manner, if the user for example adds a new item between the moments of time on the display means, the data related to the later times must be scrolled down respectively. For example, the user adds the moment 9:30 and a meeting related to it, wherein in the example of Fig. 2, the markings for the moments 10:00 and 11:00 o'clock are moved downwards and the marking for 12:00 o'clock is removed totally from the display. In this case, data are stored preferably in such a way that in addition to the date information, a moment of time item is stored, together with a set of coordinate data for the markings related to the time in question. For example in Fig. 2, the text 206 related to the time 12:00 o'clock is stored in such a way that it contains the coordinate data that were transmitted by the control means 6 to the processor 2 at the stage when the user wrote said text 206.

In a preferred embodiment of the invention, it is still possible to improve the informativeness of the free-form markings by the user in that the markings can be made in different colours. In this case, the electronic device 1 has means for changing the drawing colour or the so-called grey tone of the pen. This can be arranged either as a function defined for the touch-sensitive display area, or as key commands of a keypad 8. In this case, the display means 4 used is preferably a colour display or a two-colour display in which different brightness levels can be produced to implement the grey tones.

The electronic device 1 preferably also comprises an editing function which the user can activate/deactivate *e.g.* with a selection box 211. The user uses the marking means 11 to limit an area from which markings are deleted. This area can be a free-form area to be drawn with a pen, or a rectangular area, wherein the user uses the marking means 11 to determine two extreme angle points of the rectangle, after which the area left inside the rectangle is deleted.

If necessary, the user can also deactivate the marking function according to the invention, wherein the display means 4 of the electronic device is used to display the data stored in the memo function, in a way known as such.

It is obvious that the marking data can be stored in a variety of ways. The above-mentioned set of coordinate pairs is a preferred way of storing, but as another alternative, it is possible to use a so-called bit map, wherein for each pixel in the contact area of the display means 4, information is stored on whether or not the user has made markings in the area of the pixel in question. This bit map storing method requires a considerable greater memory capacity than the above-presented method based on the storing of coordinate data.

Although the invention has been described above in connection with calendar functions, corresponding implementation principles can also be applied in other memo functions, such as telephone directory, address book and/or notepad functions.

Instead of the touch-sensitive means 5, it is also possible to use another such means, whereby the movement of the marking means 11 can be detected. Some examples which should be mentioned here include optical detection, acoustic detection, and magnetic/electromagnetic detection. Moreover, it is not necessary in all application to have a contact between the marking means 11 and the means 5 detecting the movement, but it is sufficient that the marking means 11 is brought close to the surface of this means 5 detecting the movement.

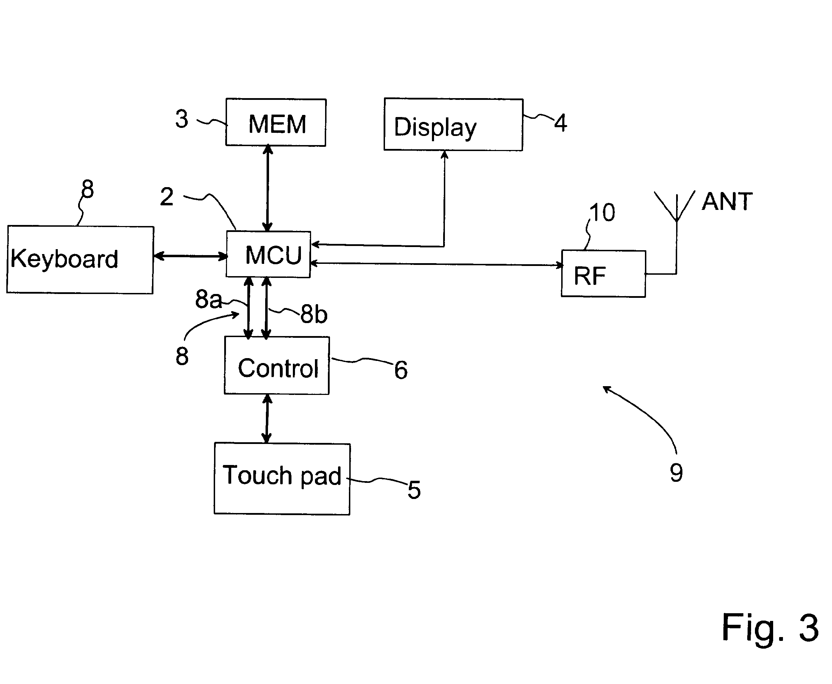

Furthermore, Fig. 3 shows an application in which the method according to the invention is implemented in a wireless communication device 9 comprising memo functions. The wireless communication device 9 comprises a radio part 10, whereby the wireless communication device can be in a data transmission connection to a mobile communication network (not shown) in a way known *per se.* The wireless communication device also comprises a keypad 7, a display means 4, memory means 3, one or several processors 2, a touch-sensitive means 5, as well as a control means 6 for the touch-sensitive means. The memo functions are preferably implemented in the application software of the processor 2, where also the operations required in mobile station functions are encoded. It is obvious that the wireless communication device 9 can also have other processors, in which at least part of the functions of the electronic device can be implemented. This wireless communication device 9 according to a preferred embodiment of the invention operates, in view of the memo functions, substantially in the same way as presented above in connection with the electronic device 1, wherein its more detailed description will be rendered unnecessary in this context.

The present invention is not limited solely to the embodiment presented above, but it can be modified within the scope of the appended claims.

## Claims

1. An electronic device (1, 9) comprising means (2, 3) for performing memo functions, means (2, 3) for defining data in said memo functions, and at least one display means (4) for displaying data defined in the memo functions, **characterized** in that the electronic device (1, 9) also comprises means (5) for generating free-form markings (204-208) and means (2, 3) for adding said free-form markings to data defined in said memo functions.

2. The electronic device according to claim 1, **characterized** in that the means (5) for generating free-form markings (204-208) comprise a touch-sensitive means.

3. The electronic device according to claim 2, **characterized** in that the touch-sensitive means (5) is at least partly transparent and that it is located at least partly on top of the display means (4).

4. The electronic device according to claim 1, 2 or 3, **characterized** in that it comprises means (2, 6, 8) for displaying markings (204-208) made with a touch-sensitive means on the display means (4).

5. The electronic device according to claims 1 to 4, **characterized** in that it comprises means (2, 6, 8) for deleting markings (204-208) made with a touch-sensitive means.

6. The electronic device according to any of the claims of 1 to 5, **characterized** in that it is a wireless communication device (9).

7. The electronic device according to any of the claims 1 to 6, **characterized** in that the memo functions comprise at least calendar functions.

8. A method in an electronic device (1, 9) for performing memo functions, defining data in said memo functions and displaying data defined in the memo functions, **characterized** in that the method also includes generating free-form markings (204-208) and adding said free-form markings (204-208) to data defined in said memo functions.

9. The method according to claim 8, **characterized** in that free-form markings (204-208) are detected with a touch-sensitive means (5), which is at least partly transparent.

10. The method according to claim 8 or 9, in which the electronic device (1, 9) comprises at least one display means (4), **characterized** in that markings (204-208) detected with the touch-sensitive means are displayed on the display means (4).

11. The method according to claim 8, 9 or 10, **characterized** in that at least calendar events are defined in the memo functions.
